# FASCICULE DE BREVET EUROPEEN

(11) **EP 3 973 150 B1**
(45) Date de publication et mention de la délivrance du brevet: **11.12.2024**
(21) Numéro de dépôt: 20721659.9
(22) Date de dépôt: 05.05.2020
(51) Int. Cl.: F01N 3/10, F01N 3/021, F01N 3/023, F01N 13/00

(54) **SYSTÈME DE POST-TRAITEMENT DES GAZ D'ÉCHAPPEMENT D'UNE LIGNE D'ÉCHAPPEMENT D'UN MOTEUR À COMBUSTION INTERNE À ALLUMAGE COMMANDÉ**
ABGASNACHBEHANDLUNGSSYSTEM EINER ABGASLEITUNG EINER BRENNKRAFTMASCHINE MIT POSITIVER ZÜNDUNG
SYSTEM FOR POST-TREATING EXHAUST GASES OF AN EXHAUST LINE OF AN INTERNAL COMBUSTION ENGINE WITH POSITIVE IGNITION

(30) Priorité: 23.05.2019 FR 1905420
(43) Date de publication de la demande: 30.03.2022
(73) Titulaire: NEW H POWERTRAIN HOLDING, S.L.U., 47008 Valladolid (ES)
(72) Inventeur: FASOLO, Bertrand, 92160 ANTONY (FR)
(74) Mandataire: Renault Group
(86) Numéro de dépôt international: PCT/EP2020/062374
(87) Numéro de publication internationale: WO 2020/233976

(56) Documents cités:
- EP-A1- 3 473 840
- DE-A1- 102013 217 169
- DE-A1- 102017 102 393
- US-A1- 2018 230 886

## Description

La présente invention concerne le domaine des systèmes de traitement d'effluents gazeux dont est pourvue la ligne d'échappement d'un moteur à combustion interne à allumage commandé.

Les moteurs à combustion interne produisent des gaz d'échappement qui contiennent des substances polluantes telles que des hydrocarbures imbrûlés (HC), du monoxyde de carbone (CO), et des oxydes d'azote (NOₓ), et des particules (PM). Il est nécessaire de traiter ces substances polluantes avant de les évacuer dans l'atmosphère. Les véhicules automobiles sont pourvus, à cet effet, d'un convertisseur catalytique installé dans la ligne d'échappement du moteur, afin d'oxyder les molécules réductrices constituées par le monoxyde de carbone (CO) et les hydrocarbures imbrûlés (HC), et de traiter les molécules d'oxydes d'azote (NOₓ), sous l'action du monoxyde de carbone, pour les transformer en diazote (N₂) et en dioxyde de carbone (CO₂).

Les moteurs à allumage commandés sont aussi de plus en plus équipés de filtres à particules dans le but de respecter au mieux les seuils d'émissions réglementaires de particules (PM) mesurées à l'échappement. Plus précisément, deux seuils distincts visent à limiter d'une part la masse de particules, et d'autre part le nombre de particules.

Les normes actuelles, et notamment la norme connue sous le nom de « Euro-6d-Temp », rendent obligatoires la présence d'un filtre à particule dit Gasoline Particulate Filter, d'acronyme GPF en termes anglo-saxons, dans les moteurs à essence à injection directe. Un tel filtre à particules dispose généralement d'une imprégnation catalytique lui permettant d'assurer la fonction de post-traitement du monoxyde de carbone (CO), des hydrocarbures imbrûlés (HC), et des molécules d'oxydes d'azote (NOₓ). Le filtre à particules à imprégnation catalytique a la même fonction qu'un catalyseur trois voies.

La régénération d'un filtre à particules, c'est-à-dire la combustion des particules accumulées dans le filtre, est réalisée de manière passive ou active.

Lors de la régénération passive, les particules sont comburées naturellement grâce à l'oxygène contenu dans les gaz d'échappement. Sur un moteur à allumage commandé fonctionnant très généralement à une richesse 1, cet oxygène n'est disponible en quantité suffisante que lorsque l'injection de carburant est coupée, c'est-à-dire à une valeur de richesse nulle. Cela se produit lors des phases de décélération dans lesquelles le conducteur lève le pied de la pédale d'accélérateur, ou lors des phases de changement de rapport de boîte de vitesses.

Dès que la température est supérieure ou égale à environ 600°C, ces phases de régénération sont rapides et efficaces compte tenu de la forte concentration en oxygène dans les gaz d'échappement.

Lors de la régénération active, les particules sont comburées de manière forcée par un réglage particulier du moteur qui consiste à adopter un régime pauvre, c'est-à-dire avec une valeur de richesse d'environ 0,95 afin d'obtenir un minimum d'oxygène dans les gaz d'échappement.

Si la température des gaz d'échappement n'est pas suffisamment élevée pour brûler efficacement les particules, c'est-à-dire qu'elle est inférieure à environ 750°C, le moteur réduit l'avance à l'allumage afin de dégrader le rendement de combustion, ce qui a pour effet d'augmenter la température.

La régénération active est utilisée lorsque le filtre à particules contient une masse de particules élevée qui pourrait conduire à un emballement thermique et à une surchauffe dudit filtre à particules si une régénération passive avait lieu.

D'autre part, le filtre à particules est regénéré afin de limiter la quantité massique de suies qu'il contient. En effet, l'efficacité courante de stockage du filtre en termes de masse, c'est-à-dire le pourcentage de masse de particules émises dans les gaz de combustion du moteur que le filtre à particules peut retenir à un moment donné, dépend de la masse de particules qui est déjà contenue dans ledit filtre. Plus précisément, elle est une fonction croissante de la masse déjà stockée dans le filtre. En d'autres termes, plus le filtre à particules est rempli, moins il va retenir de particules volumineuses et lourdes.

Cependant, l'efficacité courante de stockage du filtre en termes de nombre, c'est-à-dire le pourcentage du nombre de particules émises dans les gaz de combustion du moteur du moteur que le filtre à particules peut retenir à un moment donné, dépend aussi de la masse de particules déjà stockée dans le filtre, mais elle en est une fonction décroissante. En d'autres termes, plus le filtre à particules est rempli, plus il va retenir de particules peu volumineuses et légères.

La régénération active est également utilisée pour éviter le colmatage du filtre à particules.

Toutefois, la régénération active a le désavantage d'augmenter fortement les émissions d'oxyde d'azote (NOₓ) à l'échappement, engendré par le fonctionnement du moteur en mélange pauvre.

La masse de particules présentes dans le filtre à particules et qui sert au déclenchement de la régénération active peut être estimée, par exemple, à partir du débit des gaz traversant ledit filtre et d'une valeur de perte de charge (dépression) régnant aux bornes du filtre. Ledit débit peut être mesuré, par exemple, par un débitmètre et la valeur de dépression peut être déterminée, par exemple, grâce à un capteur de pression amont et un capteur de pression aval du filtre à particules ou grâce à un capteur de pression différentielle.

De plus, suivant le type de roulage du conducteur du véhicule, la masse de particules présente dans le filtre à particules évolue. En effet, en roulage type urbain, où le véhicule décélère et/ou le conducteur change fréquemment de rapport de la boîte de vitesses, le filtre à particules subit de nombreuses régénérations passives. Le filtre à particules est donc fréquemment vidé et ne contient que très peu de particules en termes de masse, ce qui est favorable au stockage des particules entre deux régénérations. Toutefois, le filtre à particules présente alors une faible efficacité en termes de nombre de particules.

On connaît aujourd'hui deux architectures différentes utilisées dans les systèmes de post-traitement.

L'architecture rapprochée dite « close-coupled » en termes anglo-saxons, dans laquelle le catalyseur trois voies et le filtre à particules sont tous les deux placés au plus près de la sortie du moteur, et notamment directement en aval de la sortie d'un collecteur d'échappement du moteur, ou directement en aval de la turbine d'un turbocompresseur du moteur quand celui-ci est du type suralimenté par turbocompresseur.

Dans cette configuration, les pertes thermiques entre la sortie des gaz d'échappement du moteur et l'entrée du filtre à particules sont relativement faibles. Le filtre à particules est donc majoritairement peu chargé en masse de particules, ce qui évite le risque de colmatage. A contrario, le filtre à particules a une moindre efficacité de filtration en nombre de particules car le lit de suies est fréquemment brûlé. Une telle architecture est donc sujette à des fuites de nombreuses particules à l'échappement.

L'architecture éloignée, dans laquelle le catalyseur trois voies est placé au plus près de la sortie du moteur, et notamment directement en aval de la sortie du collecteur ou de la turbine, et le filtre à particules est disposé généralement en dehors du compartiment moteur, par exemple sous la caisse du véhicule.

Dans cette configuration, les pertes thermiques entre la sortie des gaz d'échappement du moteur et l'entrée du filtre à particules sont relativement élevées. Le filtre à particules est donc majoritairement chargé en masse de particules et un lit de suies suffisant est maintenu pour assurer l'efficacité de filtration en nombre de particules. A contrario, le risque de colmatage du filtre à particules est élevé car les températures sont insuffisantes pour avoir une régénération passive. Une telle architecture augmente le taux d'oxyde d'azote à l'échappement car il faut avoir davantage recours à des régénérations actives du filtre pendant lesquelles le mélange air-carburant est pauvre.

On connaît du document US 2018/0230883 -A1, une architecture comprenant un premier catalyseur trois voies, un échangeur et un filtre à particules ou un deuxième catalyseur trois voies en aval dudit premier catalyseur. Un système d'injection d'air est placé en amont du filtre à particules ou du deuxième catalyseur trois voies. Une telle architecture permet d'optimiser le post-traitement des gaz d'échappement de manière générale sans différencier le traitement des particules en nombre ou en masse.

On connaît également du document FR 2 984 403 - A3 qui divulgue un filtre à particules de moteur à essence apte à être régénéré passivement par une augmentation maîtrisée de la température, sans déclenchement de régénération active. Une telle architecture a pour inconvénient de purger le filtre à particules et de filtrer de manière inefficace les particules en nombre.

DE 10 2017 102393-A1 divulgue un système de post-traitement des gaz d'échappement d'un moteur à combustion interne comprenant un second catalyseur trois voies combiné à un filtre à particules en aval du collecteur d'échappement suivi d'un catalyseur de réduction sélective combiné à un filtre à particules et d'un troisième catalyseur trois voies.

Il existe un besoin de disposer d'un système de post-traitement des gaz d'échappement capable de minimiser à la fois les émissions de particules à la fois en termes de masse et de nombre, ainsi que les émissions d'oxydes d'azote, tout en limitant la consommation de carburant.

L'invention a pour objet un système de post-traitement des gaz d'échappement d'une ligne d'échappement d'un moteur à combustion interne à allumage commandé selon la revendication 1 comprenant au moins un cylindre, un collecteur d'admission d'air frais, un collecteur d'échappement, et pouvant en outre comprendre un système de turbo compression comprenant une turbine entraînée par les gaz d'échappement et un compresseur monté sur le même axe que la turbine et assurant une compression de l'air.

Le système de post-traitement comprend un convertisseur catalytique d'oxydation-réduction à trois voies situé directement en aval du collecteur ou de la turbine. Ledit convertisseur catalytique assure essentiellement une oxydation des molécules réductrices constituées par le monoxyde de carbone et les hydrocarbures imbrûlés, ainsi qu'un traitement des oxydes d'azote par le monoxyde de carbone. Ce convertisseur catalytique est connu de l'homme du métier et ne sera pas davantage décrit. On notera néanmoins qu'il peut posséder une structure monolithique et est pourvu de canaux imprégnés d'une phase catalytique comprenant au moins un métal précieux faisant partie du groupe du platine, et présentant une grande surface de contact avec les gaz d'échappement.

Le système comprend également un premier filtre à particules monté directement en aval du convertisseur catalytique, de sorte que les pertes thermiques entre la sortie des gaz d'échappement du moteur et l'entrée du premier filtre à particules sont relativement faibles ; et un deuxième filtre à particules situé en aval du premier filtre à particules.

Grâce au système de post traitement tel que décrit, le premier filtre à particules permet de traiter naturellement la majorité des particules en masse, en sortie du moteur, grâce à une forte efficacité des phases de régénération passive. Les fuites de particules en nombre sont ensuite filtrées par le deuxième filtre à particules disposé en aval, puisque celui-ci est maintenu avec un lit de suies.

Le système comprend un dispositif de récupération de l'énergie des gaz à l'échappement pour refroidir les gaz d'échappement en amont du deuxième filtre à particules, le dispositif de récupération de l'énergie des gaz à l'échappement étant parcouru par un fluide dit de refroidissement. L'énergie récupérée via le fluide de refroidissement est avantageusement utilisée pour chauffer le moteur ou l'habitacle du véhicule.

Le dispositif de récupération de l'énergie des gaz peut être configuré pour maintenir la température des gaz d'échappement pénétrant dans le deuxième filtre à particules en dessous d'une valeur de seuil de régénération passive.

Selon une réalisation de l'invention,
la valeur de seuil de régénération passive est comprise entre 400°C et 600°C, par exemple comprises entre 450°C et 550°C, par exemple égale à 450°C. Ainsi, les régénérations passives dans le deuxième filtre à particules sont empêchées par une température trop basse, de sorte que seule la régénération active est possible. Il est donc possible de maîtriser la quantité de particules en masse présente dans ce deuxième filtre.

Avantageusement, le système comprend des moyens de détermination de la perte de charge (dépression) aux bornes du deuxième filtre, tel que par exemple un capteur de pression amont et un capteur de pression aval ou un capteur de pression différentielle, des moyens de détermination du débit de gaz traversant ledit filtre, tel que par exemple un débitmètre, et des moyens de détermination de la masse de particules contenue dans ledit filtre en fonction de ladite dépression et dudit débit.

Selon une réalisation de l'invention,
le système comprend un module de déclenchement de la régénération active dudit deuxième filtre lorsque la masse de particules est supérieure ou égale à un seuil supérieur et un module d'arrêt de la régénération active lorsque la masse de particules est inférieure ou égale à un seuil inférieur. Ainsi, lorsqu'une régénération active du deuxième filtre à particules est nécessaire, le dispositif de récupération de l'énergie des gaz est désactivé de manière à permettre à la température d'atteindre une température de combustion des particules dans le filtre, par exemple égale à 650°C.

Le seuil supérieur peut être déterminé pour permettre au deuxième filtre de ne pas être colmaté et le seuil inférieur est déterminé pour permettre le filtrage intégral ou quasi-intégral des particules en nombre. Par exemple le seuil inférieur est égal à 0.1g et le seuil supérieur est égal à 5g.

Le premier filtre à particules pourrait également être équipé de moyens de régénération active similaires à ceux utilisés pour le deuxième filtre à particules.

Le premier filtre à particules et/ou le deuxième filtre à particules peut être imprégné d'une phase catalytique, comprenant au moins un métal précieux faisant partie du groupe du platine, et présentant une grande surface de contact avec les gaz d'échappement.

Selon un deuxième aspect, l'invention concerne un véhicule automobile comprenant un moteur à combustion interne à allumage commandé comprenant au moins un cylindre, un collecteur d'admission d'air frais, un collecteur d'échappement, et pouvant en outre comprendre un système de turbo compression comprenant une turbine entraînée par les gaz d'échappement et un compresseur monté sur le même axe que la turbine et assurant une compression de l'air, ledit collecteur d'échappement étant configuré pour récupérer les gaz d'échappement issus de la combustion et évacuer ces derniers vers l'extérieur, par l'intermédiaire d'un premier conduit d'échappement des gaz débouchant sur la turbine du turbocompresseur)et par une ligne d'échappement comprenant un système de post-traitement des gaz d'échappement tel que décrit précédemment.

Avantageusement, le convertisseur catalytique d'oxydation-réduction et le premier filtre à particules sont situés dans le compartiment moteur, au plus près de la sortie des cylindres, notamment directement à l'aval de la sortie du collecteur d'échappement ou de la turbine, et le deuxième filtre à particule est situé en dehors du compartiment moteur. Le deuxième filtre à particules est situé, par exemple, sous la caisse du véhicule.

D'autres buts, caractéristiques et avantages de l'invention apparaîtront à la lecture de la description suivante, donnée uniquement à titre d'exemple non limitatif, et faite en référence à la figure unique annexée sur laquelle :

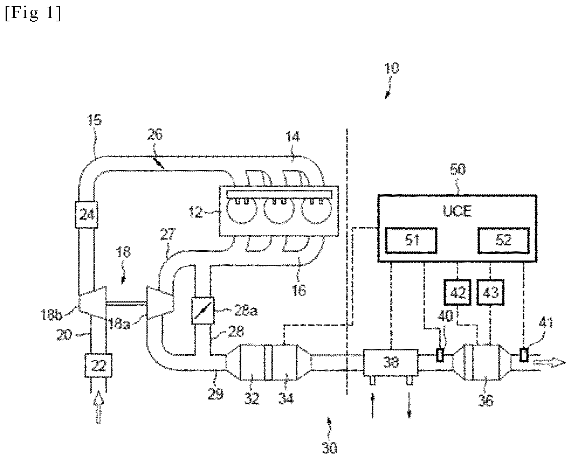

[Fig 1] représente, de manière schématique, la structure d'un moteur à combustion interne à allumage commandé d'un véhicule automobile équipé d'une ligne d'échappement pourvue d'un système de post-traitement des gaz d'échappement selon l'invention. Il se présente ici de manière non limitative sous la forme d'un moteur du type suralimenté par turbocompresseur.

Sur la figure 1, on a représenté, de manière schématique, la structure générale d'un moteur à combustion interne 10 à allumage commandé d'un véhicule automobile.

Dans l'exemple illustré, le moteur à combustion interne 10 comprend, de manière non limitative trois cylindres 12 en ligne, un collecteur d'admission d'air frais 14, un collecteur d'échappement 16 et un système de turbo compression, ou turbocompresseur 18.

Les cylindres 12 sont alimentés en air par l'intermédiaire du collecteur d'admission 14, ou répartiteur d'admission, lui-même alimenté par une conduite 20 pourvue d'un filtre à air 22 et du turbocompresseur 18 de suralimentation du moteur 10 en air.

Le turbocompresseur 18 comporte essentiellement une turbine 18a entraînée par les gaz d'échappement et un compresseur 18b monté sur le même axe que la turbine 18a et assurant une compression de l'air distribué par le filtre à air 22, dans le but d'augmenter la quantité massique d'air admise dans les cylindres 12 du moteur 10. Un échangeur thermique 24 peut être placé après la sortie du compresseur 18b équipant la conduite 15 d'alimentation du collecteur d'admission 14 en air frais.

Dans un mode de réalisation non représenté, le moteur peut être du type à aspiration naturelle. Il se distingue alors du mode représenté par la figure 1 par le fait que le moteur ne comprend pas de turbocompresseur 18, donc qu'il ne comprend ni turbine 18a, ni compresseur 18b.

Dans un autre mode de réalisation non représenté, le moteur peut être du type suralimenté, mais non pas suralimenté par un turbocompresseur. Par exemple il peut être suralimenté par un compresseur 18b électrique, ou encore par un compresseur 18b mécanique entraîné par un vilebrequin du moteur. Un tel mode se distingue du mode représenté par la figure 1 par le fait que le moteur ne comprend pas de turbine 18a.

Tel qu'illustré et à titre d'exemple non limitatif, la conduite d'admission d'air 15 peut comprendre un boitier papillon 26 ou une soupape d'admission afin de réguler le débit du flux d'air entrant dans le collecteur d'admission 14.

En ce qui concerne le collecteur d'échappement 16, celui-ci récupère les gaz d'échappement issus de la combustion et évacue ces derniers vers l'extérieur, par l'intermédiaire d'un premier conduit d'échappement des gaz 27 débouchant sur la turbine 18a du turbocompresseur 18, d'une deuxième conduit d'échappement 28 et par une ligne d'échappement 29.

En variante, le deuxième conduit d'échappement 28 comporte une soupape de décharge 28a.

La ligne d'échappement 29 illustrée sur la figure 1 comprend un système 30 de post-traitement des gaz d'échappement.

Ledit système 30 comprend un convertisseur catalytique d'oxydation-réduction 32 à trois voies situé directement en aval de la turbine 18a et assurant essentiellement une oxydation des molécules réductrices constituées par le monoxyde de carbone (CO) et les hydrocarbures imbrûlés (HC), ainsi qu'un traitement des oxydes d'azote (NOₓ) par le monoxyde de carbone.

En variante, dans les modes de réalisation (non représentés) où le moteur ne comporte pas de turbine 18a, par exemple dans le cas d'un moteur à aspiration naturelle ou suralimenté par un compresseur électrique ou mécanique, le convertisseur catalytique 32 est monté directement en aval du collecteur d'échappement 16.

Ce convertisseur catalytique 32 est connu de l'homme du métier et ne sera pas davantage décrit. On notera néanmoins qu'il peut posséder une structure monolithique et est pourvu de canaux imprégnés d'une phase catalytique comprenant un métal précieux du groupe du platine, et présentant une grande surface de contact avec les gaz d'échappement.

Ledit système 30 comprend en outre un premier filtre à particules 34 monté directement en aval du convertisseur catalytique 32 de sorte que les pertes thermiques entre la sortie des gaz d'échappement du moteur et l'entrée du premier filtre à particules 34 sont relativement faibles.

Le convertisseur catalytique d'oxydation-réduction 32 et le premier filtre à particules 34 sont situés dans le compartiment moteur, au plus près de la sortie des cylindres.

Le système 30 comprend également un deuxième filtre à particules 36 situé en aval du premier filtre à particules 34 en dehors du compartiment moteur. La séparation entre l'intérieur et l'extérieur du compartiment moteur est illustrée schématiquement par une ligne en pointillés. Le deuxième filtre à particules 36 est situé, par exemple, sous la caisse du véhicule.

Tel qu'illustré sur la figure 1, le système 30 de post-traitement comprend un dispositif 38 de récupération de l'énergie des gaz à l'échappement pour refroidir les gaz d'échappement en amont du deuxième filtre à particules 36. Le dispositif 38 de récupération de l'énergie des gaz à l'échappement est parcouru par un fluide dit de refroidissement. L'énergie récupérée via le fluide de refroidissement est avantageusement utilisée pour chauffer le moteur ou l'habitacle du véhicule.

Ledit dispositif 38 permet de maintenir la température des gaz d'échappement pénétrant dans le deuxième filtre à particules 36 en dessous d'une valeur de seuil de régénération passive. La valeur de seuil de régénération passive est par exemple comprise entre 400°C et 600°C, par exemple comprises entre 450°C et 550°C, par exemple égale à 450°C. Ainsi, les régénérations passives dans le deuxième filtre à particules 36 sont empêchées par une température trop basse, de sorte que seule la régénération active n'est possible. Il est donc possible de maîtriser la quantité de particules en masse présente dans ce deuxième filtre 36.

La masse de particules présente dans le deuxième filtre 36 est comprise entre deux seuils, à savoir un premier seuil, par exemple égal à 0,1g, déterminé pour permettre le filtrage intégral des particules en nombre et un deuxième seuil plus élevé que le premier, par exemple égal à 5 g, qui est déterminé pour permettre audit filtre de ne pas être colmaté.

Le deuxième filtre à particules 36 est en outre associé à des moyens 40, 41 de détermination de la perte de charge ou dépression aux bornes dudit filtre 36, tel que par exemple un capteur 40 de pression amont et un capteur de pression aval 41, ou en variante non représentée un capteur de pression différentielle. Ledit filtre 36 est également associé à des moyens 42 de détermination du débit de gaz le traversant, tel que par exemple un débitmètre, et des moyens 43 de détermination de la masse de particules contenue dans ledit filtre 36 en fonction de ladite dépression et dudit débit.

Les signaux de sortie des moyens 40, 41 de détermination de la dépression, des moyens 42 de détermination du débit de gaz et des moyens 43 de détermination de la masse de particules sont mis en forme dans une unité de commande électronique, « UCE », ou calculateur embarqué 50.

L'unité de commande ou calculateur embarqué 50 assure essentiellement le contrôle du fonctionnement du moteur 1.

L'unité de commande 50 comprend un module 51 de déclenchement de la régénération active dudit deuxième filtre 36 lorsque la masse de particules y est supérieure ou égale au deuxième seuil et un module 52 d'arrêt de la régénération active lorsque la masse de particules y est inférieure ou égale au premier seuil.

Ainsi, lorsqu'une régénération active du deuxième filtre à particules 36 est nécessaire, le dispositif 30 de récupération de l'énergie des gaz est désactivé de manière à permettre à la température d'atteindre une température de combustion des particules dans le filtre, par exemple égale à 650°C.

Le premier filtre à particules 34 peut également être équipé de moyens de régénération active similaires à ceux utilisés pour le deuxième filtre à particules 36. De tels moyens peuvent être utilisés pour une régénération active du premier filtre 34, dans le cas où le cycle d'utilisation du véhicule ne permet pas de régénérer suffisamment le premier filtre de manière passive, et que la masse de suies stockées en son sein risque de le colmater.

Chacun des filtres à particules 34, 36 peut être imprégné d'une phase catalytique comprenant notamment au moins un métal précieux du groupe du platine, et présentant une grande surface de contact avec les gaz d'échappement.

Grâce au système de post traitement tel que décrit, le premier filtre à particules permet de traiter naturellement la majorité des particules en masse, en sortie du moteur, grâce à une forte efficacité des phases de régénération passive. Les fuites de particules en nombre sont ensuite filtrées par le deuxième filtre à particules disposé en aval, puisque celui-ci est maintenu avec un lit de suies.

## Revendications

1. Système (30) de post-traitement des gaz d'échappement d'une ligne d'échappement (29) d'un moteur à combustion interne (10) à allumage commandé comprenant au moins un cylindre (12), un collecteur d'admission d'air frais (14), un collecteur d'échappement (16), et pouvant comprendre en outre un système de turbo compression (18) comprenant une turbine (18a) entraînée par les gaz d'échappement et un compresseur (18b) monté sur le même axe que la turbine (18a) et assurant une compression de l'air, le système comprenant :
un convertisseur catalytique d'oxydation-réduction (32) à trois voies situé directement en aval du collecteur d'échappement (16) ou de la turbine (18a) ;
un premier filtre à particules (34) monté directement en aval du convertisseur catalytique (32) ; et
un deuxième filtre à particules (36) situé en aval du premier filtre à particules (34), **caractérisé en ce qu'**il comprend un dispositif (38) de récupération de l'énergie des gaz à l'échappement pour refroidir les gaz d'échappement en amont du deuxième filtre à particules (36), le dispositif (38) de récupération de l'énergie des gaz à l'échappement étant parcouru par un fluide dit de refroidissement.

2. Système (30) selon la revendication 1, dans lequel le dispositif (38) de récupération de l'énergie des gaz est configuré pour maintenir la température des gaz d'échappement pénétrant dans le deuxième filtre à particules (36) en dessous d'une valeur de seuil de régénération passive.

3. Système (30) selon la revendication 2, dans lequel la valeur de seuil de régénération passive est comprise entre 400°C et 600°C, par exemple comprise entre 450°C et 550°C, par exemple égale à 450°C.

4. Système (30) selon l'une quelconque des revendications précédentes, comprenant des moyens (40, 41) de détermination de la perte de charge aux bornes du deuxième filtre (36), des moyens (42) de détermination du débit de gaz traversant ledit filtre (36), et des moyens (43) de détermination de la masse de particules contenue dans ledit filtre (36) en fonction de ladite perte de charge et dudit débit.

5. Système (30) selon la revendication 4, comprenant un module (51) de déclenchement de la régénération active dudit deuxième filtre (36) lorsque la masse de particules est supérieure ou égale à un seuil supérieur et un module (52) d'arrêt de la régénération active lorsque la masse de particules est inférieure ou égale à un seuil inférieur.

6. Système (30) selon la revendication 5, dans lequel le seuil supérieur est déterminé pour permettre au deuxième filtre (36) de ne pas être colmaté et le seuil inférieur est déterminé pour permettre le filtrage intégral ou quasi-intégral des particules en nombre.

7. Système (30) selon l'une quelconque des revendications précédentes, dans lequel le premier filtre à particules (34) et/ou le deuxième filtre à particules (36) est imprégné d'une phase catalytique,

8. Véhicule automobile comprenant un moteur à combustion interne (10) à allumage commandé comprenant au moins un cylindre (12), un collecteur d'admission d'air frais (14), un collecteur d'échappement (16), et pouvant comprendre en outre un système de turbo compression (18) comprenant une turbine (18a) entraînée par les gaz d'échappement et un compresseur (18b) monté sur le même axe que la turbine (18a) et assurant une compression de l'air, ledit collecteur d'échappement (16) étant configuré pour récupérer les gaz d'échappement issus de la combustion et évacuer ces derniers vers l'extérieur, par l'intermédiaire d'un premier conduit d'échappement des gaz (27) débouchant sur la turbine (18a) du turbocompresseur (18) et par une ligne d'échappement (29) comprenant un système (30) de post-traitement des gaz d'échappement selon l'une quelconque des revendications précédentes.

9. Véhicule selon la revendication 8, dans lequel le convertisseur catalytique d'oxydation-réduction (32) et le premier filtre à particules (34) sont situés dans le compartiment moteur, et le deuxième filtre à particule (36) est situé en dehors du compartiment moteur.

## Patentansprüche

1. System (30) zur Nachbehandlung der Abgase einer Abgasleitung (29) eines Verbrennungsmotors (10) mit Fremdzündung, der mindestens einen Zylinder (12), einen Frischluftansaugkrümmer (14), einen Abgaskrümmer (16) umfasst und ferner ein Turboverdichtungssystem (18) umfassen kann, das eine durch die Abgase angetriebene Turbine (18a) und einen Verdichter (18b), der auf derselben Achse wie die Turbine (18a) montiert ist und eine Verdichtung der Luft gewährleistet, umfasst, wobei das System umfasst:
einen Dreiwege-Oxidations-Reduktions-Katalysator (32), der sich direkt stromabwärts des Abgaskrümmers (16) oder der Turbine (18a) befindet;
einen ersten Partikelfilter (34), der direkt stromabwärts des Katalysators (32) montiert ist; und
einen zweiten Partikelfilter (36), der sich stromabwärts des ersten Partikelfilters (34) befindet, **dadurch gekennzeichnet, dass** er eine Vorrichtung (38) zum Rückgewinnen von Energie aus den Abgasen umfasst, um die Abgase stromaufwärts des zweiten Partikelfilters (36) abzukühlen, wobei die Vorrichtung (38) zum Rückgewinnen von Energie aus den Abgasen von einem sogenannten Kühlfluid durchströmt wird.

2. System (30) nach Anspruch 1, wobei die Vorrichtung (38) zum Rückgewinnen der Gasenergie dazu konfiguriert ist, die Temperatur der in den zweiten Partikelfilter (36) eintretenden Abgase unterhalb eines Schwellenwerts für die passive Regeneration zu halten.

3. System (30) nach Anspruch 2, wobei der Schwellenwert für die passive Regeneration zwischen 400 °C und 600 °C, beispielsweise zwischen 450 °C und 550 °C, beispielsweise gleich 450 °C, liegt.

4. System (30) nach einem der vorstehenden Ansprüche, umfassend Mittel (40, 41) zur Bestimmung des Lastverlusts an den Anschlüssen des zweiten Filters (36), Mittel (42) zur Bestimmung der Durchflussrate des durch den Filter (36) strömenden Gases und Mittel (43) zur Bestimmung der in dem Filter (36) enthaltenen Partikelmasse in Abhängigkeit vom Lastverlust und der Durchflussrate.

5. System (30) nach Anspruch 4, umfassend ein Modul (51) zum Auslösen der aktiven Regeneration des zweiten Filters (36), wenn die Partikelmasse größer oder gleich einem oberen Schwellenwert ist, und ein Modul (52) zum Stoppen der aktiven Regeneration, wenn die Partikelmasse kleiner oder gleich einem unteren Schwellenwert ist.

6. System (30) nach Anspruch 5, wobei der obere Schwellenwert so festgelegt ist, dass ermöglicht wird, dass der zweite Filter (36) nicht verstopft, und der untere Schwellenwert so festgelegt ist, dass zahlenmäßig eine vollständige oder nahezu vollständige Filterung von Partikeln zu ermöglicht wird.

7. System (30) nach einem der vorstehenden Ansprüche, wobei der erste Partikelfilter (34) und/oder der zweite Partikelfilter (36) mit einer katalytischen Phase imprägniert ist.

8. Kraftfahrzeug, umfassend einen Verbrennungsmotor (10) mit Fremdzündung, der mindestens einen Zylinder (12), einen Frischluftansaugkrümmer (14), einen Abgaskrümmer (16) umfasst und ferner ein Turboverdichtungssystem (18) umfassen kann, das eine durch die Abgase angetriebene Turbine (18a) und einen Verdichter (18b), der auf derselben Achse wie die Turbine (18a) montiert ist und eine Verdichtung der Luft gewährleistet, umfasst, wobei der Abgaskrümmer (16) dazu konfiguriert ist, die bei der Verbrennung abgegebenen Abgase zurückzugewinnen und diese mittels einer ersten Abgasleitung (27), die in die Turbine (18a) des Turboverdichters (18) mündet, und mittels einer Abgasleitung (29), die ein System (30) zur Nachbehandlung der Abgase nach einem der vorstehenden Ansprüche umfasst, nach außen abzuführen.

9. Fahrzeug nach Anspruch 8, wobei der Oxidations-Reduktions-Katalysator (32) und der erste Partikelfilter (34) im Motorraum angeordnet sind und der zweite Partikelfilter (36) außerhalb des Motorraums angeordnet ist.

## Claims

1. System (30) for the aftertreatment of exhaust gases from an exhaust line (29) of a spark-ignition internal combustion engine (10) comprising at least one cylinder (12), a fresh air intake manifold (14), and an exhaust manifold (16), and which can further comprise a turbo-compression system (18) comprising a turbine (18a) driven by the exhaust gases and a compressor (18b) mounted on the same axis as the turbine (18a) and providing air compression, the system comprising:
a three-way oxidation-reduction catalytic converter (32) located directly downstream of the exhaust manifold (16) or the turbine (18a);
a first particulate filter (34) mounted directly downstream of the catalytic converter (32); and
a second particulate filter (36) located downstream of the first particulate filter (34), **characterized in that** it comprises an exhaust gas energy recovery device (38) for cooling the exhaust gases upstream of the second particulate filter (36), the exhaust gas energy recovery device (38) having a so-called cooling fluid flowing through it.

2. System (30) according to claim 1, wherein the gas energy recovery device (38) is configured to maintain the temperature of the exhaust gases entering the second particulate filter (36) below a passive regeneration threshold value.

3. System (30) according to claim 2, wherein the passive regeneration threshold value is between 400°C and 600°C, for example between 450°C and 550°C, for example equal to 450°C.

4. System (30) according to any one of the preceding claims, comprising means (40, 41) for determining the pressure drop across the terminals of the second filter (36), means (42) for determining the flow rate of gas passing through said filter (36), and means (43) for determining the mass of particles contained in the filter (36) on the basis of said pressure drop and flow rate.

5. System (30) according to claim 4, comprising a module (51) for triggering active regeneration of the second filter (36) when the particle mass is greater than or equal to an upper threshold, and a module (52) for stopping active regeneration when the particle mass is less than or equal to a lower threshold.

6. System (30) according to claim 5, wherein the upper threshold is determined to enable the second filter (36) not to be clogged and the lower threshold is determined to enable full or almost full filtration of the particles in number.

7. System (30) according to any one of the preceding claims, wherein the first particulate filter (34) and/or the second particulate filter (36) is impregnated with a catalytic phase.

8. Motor vehicle comprising a spark-ignition internal combustion engine (10) comprising at least one cylinder (12), a fresh air intake manifold (14), and an exhaust manifold (16), and which can further comprise a turbo-compression system (18) comprising a turbine (18a) driven by the exhaust gases and a compressor (18b) mounted on the same axis as the turbine (18a) and providing air compression, said exhaust manifold (16) being configured to recover the exhaust gases resulting from combustion and discharge them to the outside, via a first exhaust gas duct (27) opening onto the turbine (18a) of the turbo-compressor (18) and via an exhaust line (29) comprising an exhaust gas aftertreatment system (30) according to any one of the preceding claims.

9. Vehicle according to claim 8, wherein the oxidation-reduction catalytic converter (32) and the first particulate filter (34) are located in the engine compartment, and the second particulate filter (36) is located outside the engine compartment.
